# EUROPEAN PATENT SPECIFICATION

(11) **EP 3 684 540 B1**
(45) Date of publication and mention of the grant of the patent: **14.02.2024**
(21) Application number: 18755218.7
(22) Date of filing: 31.07.2018
(51) Int. Cl.: B23K 9/133, B65H 49/32, B65H 59/04

(54) **WIRE FEEDER**
DRAHTVORSCHUB
DEVIDOIR DE FIL

(30) Priority: 19.09.2017 FI 20175830
(43) Date of publication of application: 29.07.2020
(73) Proprietor: Kemppi Oy, 15810 Lahti (FI)
(72) Inventor: KUUTTI, Simo, 15810 Lahti (FI); HUJALA, Tapio, 15810 Lahti (FI); KUNNAS, Esa, 15810 Lahti (FI); HÄYRINEN, Ismo, 15810 Lahti (FI)
(74) Representative: Boco IP Oy Ab
(86) International application number: PCT/FI2018/050562
(87) International publication number: WO 2019/058018

(56) References cited:
- WO-A1-2012/072876
- FR-A5- 2 145 237

## Description

### FIELD OF THE DISCLOSURE

The present disclosure relates to welding, and particularly to wire reel hubs for welding wire.

### BACKGROUND OF THE DISCLOSURE

Document WO 2012072876 A1, on which the preamble of claim 1 is based, discloses an arrangement and a method in a wire feeding device comprising a frame, a hub system arranged to the frame for winding a wire coil, and a wire feeding mechanism for pulling the welding wire from the wire coil such that the wire coil rotates in the unwinding direction and for feeding the welding wire through the wire feeding mechanism to a welding torch. In the method, in the wire feeding starting stage, the wire feeding mechanism pulls the welding wire into motion and, in the wire feeding stopping stage, the wire feeding mechanism stops pulling the welding wire. The hub system comprises means for storing energy, said means for storing energy being adapted to store energy as the wire feeding mechanism starts to pull the welding wire from the wire coil in the unwinding direction such that, when the wire feeding mechanism stops pulling the welding wire, the stored energy is adapted to be released, pulling the wire coil in the winding direction, which is the opposite direction in relation to the unwinding direction.

Document WO 2016097475 A1 discloses a wire feeder for a welding arrangement comprising a frame, a first support and a second support connected to the frame for receiving a wire reel hub and for supporting the wire reel hub equipped with a wire reel, the wire reel hub having a first end and a second end, a wire reel hub locking means for limiting displacement of the wire reel hub received in the first support and the second support while allowing rotation of the wire reel hub, and a cover connected to the frame for covering the wire reel, wherein the first support is adapted to support the first end of the wire reel hub and the second support is adapted to support the second end of the wire reel hub, and the first support and the second support are adapted to allow rotation of the wire reel hub received in the first support and the second support about a rotational axis.

A problem with the arrangement disclosed in document WO 2012072876 A1 is that because the mechanism and the friction surfaces are inside the structure, cleaning the mechanism is difficult. Thus, dirt originating from various sources accumulating to the mechanism changes the friction forces and causes that the system no longer works in the designed manner. Additionally, such an arrangement is not compatible with the wire feeder disclosed in document WO 2016097475 A1.

### BRIEF DESCRIPTION OF THE DISCLOSURE

An object of the present disclosure is to provide a wire reel hub so as to solve the above problems.

The object of the disclosure is achieved by a wire reel hub which is characterized by what is stated in the independent claim 1. The preferred embodiments of the disclosure are disclosed in the dependent claims.

The disclosure is based on the idea of providing a wire reel hub comprising a first part and a sleeve that is supported by the first part; wherein the sleeve is configured to receive a wire reel around the sleeve unrotatably in relation to the sleeve; the sleeve is arranged rotatably in relation to the first part; and the wire reel hub comprises a first tension spring connected from one end to the first part and from the opposite end to the sleeve.

An advantage of the wire reel hub of the disclosure is that the wire reel hub of the disclosure has a simpler structure so that cleaning is easier. Thus, the friction surfaces can be kept clean which promotes keeping the friction forces constant over time.

Another advantage of wire reel hub of the disclosure is that it can be used to remove slack from welding wire in wire feeders where this functionality was not originally provided. The wire reel hub of the disclosure can also be used also in a wire feeder of the type described in document WO 2016097475 A1.

### BRIEF DESCRIPTION OF THE DRAWINGS

In the following the disclosure will be described in greater detail by means of preferred embodiments with reference to the accompanying drawings, in which
Figure 1 is a schematic cross-sectional side view of a wire feeder and a wire reel hub not falling under the scope of the present invention;
Figure 2 is a schematic cross-sectional front view of a wire feeder and a wire reel hub not falling under the scope of the present invention;
Figure 3 is a schematic cross-sectional side view of a wire reel hub not falling under the scope of the present invention;
Figure 4 is a schematic cross-sectional side view of a wire reel hub not falling under the scope of the present invention;
Figure 5 is a schematic cross-sectional side view of a wire reel hub according to an embodiment of the disclosure;
Figure 6 is a schematic cross-sectional side view of a wire reel hub according to an embodiment of the disclosure;
Figure 7 is a schematic front view of a wire reel hub according to an embodiment of the disclosure;
Figure 8 is a schematic cross-sectional side view of a wire feeder compatible with an embodiment of the disclosure; and
Figure 9 is a schematic cross-sectional front view of a wire feeder compatible with an embodiment of the disclosure.

### DETAILED DESCRIPTION OF THE DISCLOSURE

The present invention relates to a wire reel hub 2 for supporting a wire reel 3 in wire feeder 1. For example, the wire feeder 1 is a part of a welding system, such as MIG-welding system.

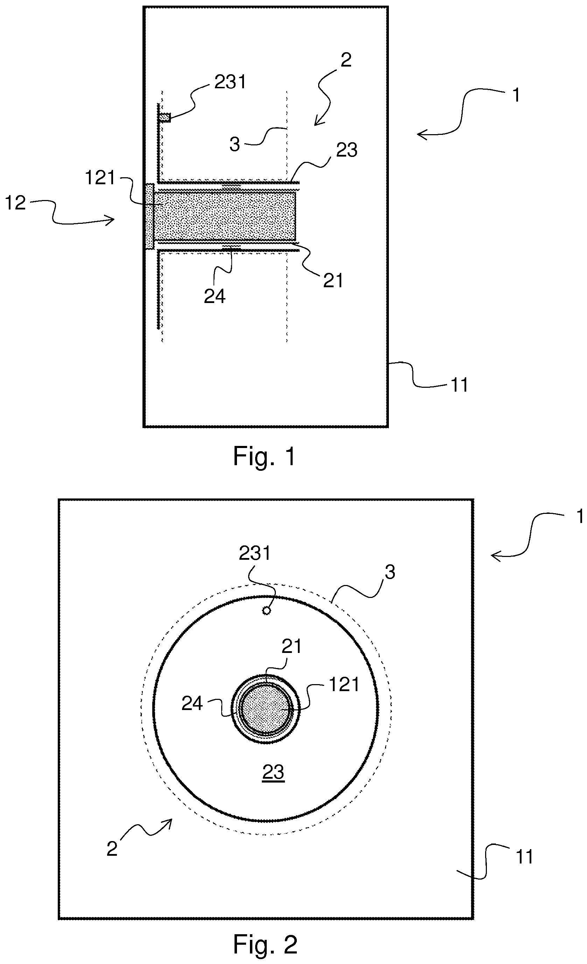

The wire feeder 1 comprises a frame 11 and a wire reel hub support means 12. The wire reel hub support means 12 are arranged unrotatably in relation to the frame 11. The wire reel hub support means 12 comprises a first support 121 for supporting the wire reel hub 2. According to the invention, the wire reel hub 2 is supported by the first support 121. For example, the first support 121 is a shaft attached unrotatably from one end to the frame of the wire feeder 1. In this case, the wire reel hub 2 is inserted around the shaft. This kind of wire feeder 1 is illustrated in Figure 1 and Figure 2.

The wire reel hub 2 comprises a first part 21 configured to be supported by the first support 121 so that rotation of the first part 21 in relation to the first support 121 is allowed.

The wire reel hub 2 comprises a sleeve 23 that is supported by the first part 21. The sleeve 23 is configured to receive a wire reel 3 around the sleeve 23 unrotatably in relation to the sleeve 23. For example, the sleeve 23 comprises locking means 231 for preventing rotation of the wire reel 3 in relation to the sleeve 23. The sleeve 23 is arranged rotatably in relation to the first part 21.

The wire reel hub 2 comprises a first tension spring 24 connected from one end to the first part 21 and from the opposite end to the sleeve 23. The purpose of the first tension spring 24 is to store energy to the wire reel hub 2 when the welding starts and the wire feeder 1 starts to feed welding wire, thus making the wire reel 2 and the wire reel hub 3 to rotate. In other words, when the wire feeder 1 begins to feed welding wire from the wire reel 3 arranged around the wire reel hub 2 arranged in the wire feeder 1, the pulling force exerted by the wire feeder 1 to the welding wire causes the wire reel 3 to rotate in a first direction and to unwind welding wire. Because the wire reel 3 is connected unrotatably to the sleeve 23 of the wire reel hub 2, the sleeve 23 begins to rotate to the first direction. Because the sleeve 23 is connected to the first part 21 via the first tension spring 24, the first tension spring 24 is tensioned and thus energy is stored to the first tension spring 24. After the moment caused by the tension in the tension spring to the first part 21 exceeds the moment caused by the friction between the first part 21 and the first support 121, the first part 21 begins to rotate in the first direction. When the wire feeder 1 stops exerting pulling force to the welding wire, rotation of the wire reel, the sleeve 23 and the first part 21 stops. Because of the energy stored to the first tension spring 24, the first tension spring 24 tends to rotate the sleeve 23, and thus the wire reel, into a second direction opposite the first direction and to wind welding wire. This causes that the welding wire is kept tight when the welding is stopped and any slack is removed.

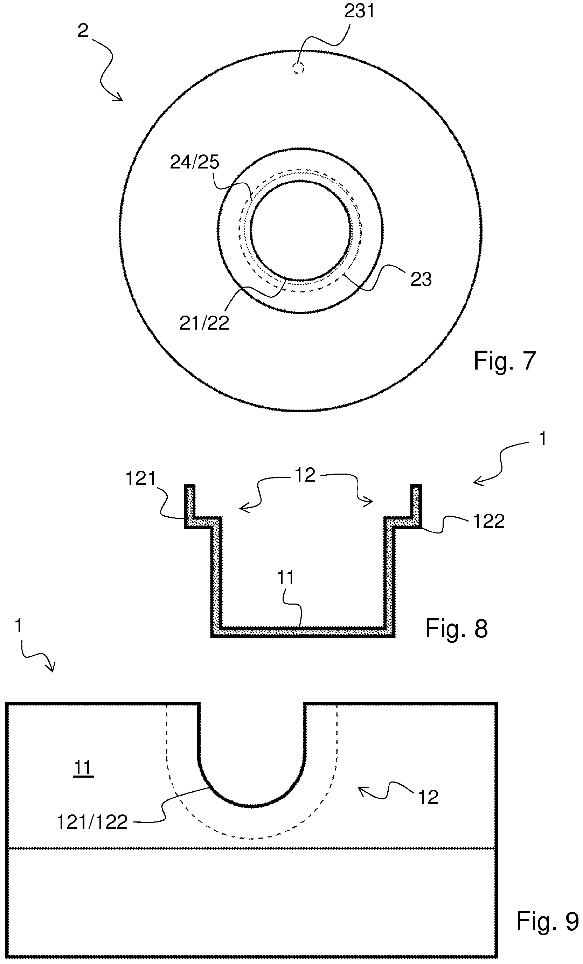

According to the invention, the wire reel hub support means 12 comprises a second support 122 and the wire reel hub 2 comprises a second part 22 opposite the first part 21. The second part 22 is configured to be supported by the second support 122 so that rotation of the second part 22 in relation to the second support 122 is allowed. In this case, the sleeve 23 is supported by the first part 21 and the second part 22. For example, the first support 121 is a slot that is arranged to receive one end of the wire reel hub 2 and the second support 122 is a slot that is arranged to receive an opposite end of the wire reel hub 2. This kind of wire feeder 1 is illustrated in Figure 8 and Figure 9. The first support 121 and the second support 122 may be arranged to be locked so that radial displacement of the wire reel hub 2 is limited for preventing separation of the wire reel hub 2 from the wire feeder 1.

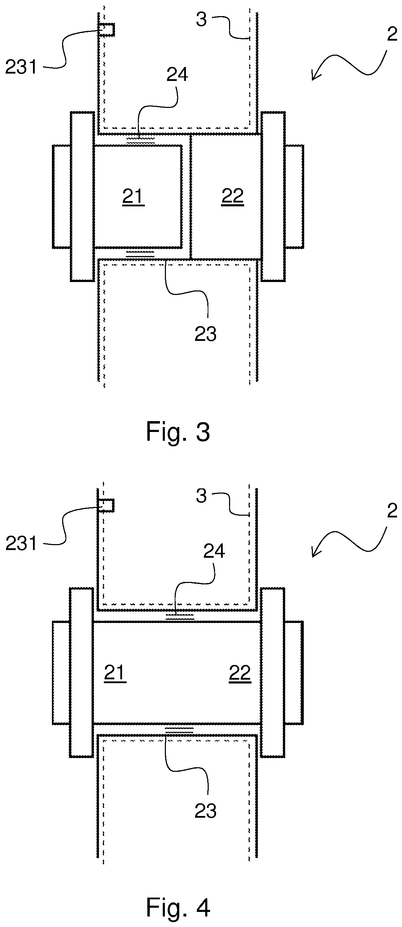

In an alternative not falling under the scope of the present invention, exemplary arrangement, the sleeve 23 is arranged unrotatably in relation to the second part 22. In this case, the sleeve 23 may be integral with the second part 22. This embodiment is illustrated in Figure 3.

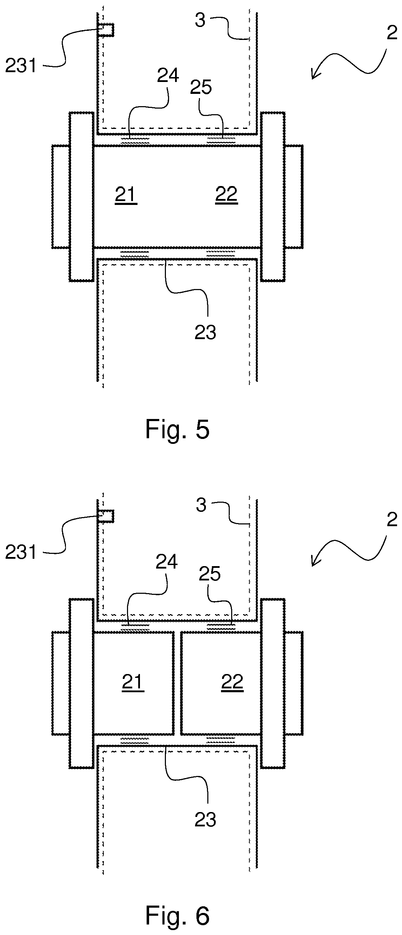

According to the invention, the sleeve 23 is arranged rotatably in relation to the second part 22. In other words, the sleeve 23 is arranged rotatably in relation to the first part 21 and the second part 22, as illustrated in Figure 4 and Figure 5.

According to an embodiment, the first part 21 is arranged unrotatably in relation to the second part 22. For example, the second part 22 is integral with the first part 21. This embodiment is illustrated in Figure 4 and Figure 5.

According to an embodiment, the first part 21 is arranged rotatably in relation to the second part 22. This embodiment is illustrated in Figure 6

According to the invention, the wire reel hub 2 comprises a second tension spring 25 connected from one end to the second part 22 and from the opposite end to the sleeve 23. This is illustrated in Figure 5 and Figure 6. The function of the second tension spring 25 in use corresponds to the function of the first tension spring described above, *mutatis mutandis.*

According to the invention, the spring constant of the first tension spring 24 is different from the spring constant of the second tension spring 25. In this way, a narrow free vibration frequency range of only one spring, or two similar springs, is prevented and thus, the likelihood of occurring vibrations is lowered.

Alternatively and according to the invention, the first tension spring 24 is tensioned to a first pre-tension; the second tension spring 25 is tensioned to a second pre-tension; and the first pre-tension is different from the second pre-tension. This is an alternative way to obtain an effect similar to the previous embodiment.

According to an embodiment, the wire reel hub 2 comprises a rotation limiting means (not shown in the figures) for limiting the rotation angle of the sleeve 23 in relation to the first part 21. The purpose of the rotation limiting means is to prevent over tensioning of the tension spring(s) 24, 25 and thus breaking the tension spring(s) 24, 25, due to over tension.

## Claims

1. A wire feeder, comprising:
- a frame (11),
- a wire reel hub (2) for supporting a wire reel (3) in a wire feeder (1), and
- a wire reel hub support means (12) comprising a first support (121) for supporting the wire reel hub (2);
- wherein the wire reel hub support means (12) is attached unrotatably to the frame (11);
**characterized in that**
- the wire reel hub (2) comprises a first part (21) configured to be supported by the first support (121);
- the wire reel hub (2) comprises a sleeve (23) supported by the first part (21); and
- the sleeve (23) is configured to receive the wire reel (3) around the sleeve (23) unrotatably in relation to the sleeve (23);
wherein:
- rotation of the first part (21) in relation to the first support (121) is allowed;
- the sleeve (23) is arranged rotatably in relation to the first part (21); and
- the wire reel hub (2) comprises a first tension spring (24), connected from one end to the first part (21) and from the opposite end to the sleeve (23),
wherein rotation of the first part (21) in a first direction is allowed after the moment caused by the tension in the first tension spring (24) to the first part (21) exceeds the moment caused by the friction between the first part (21) and the first support (121),
and further **characterized in that**
the wire reel hub (2) support means (121) comprises a second support (122);
the wire reel hub (2) comprises a second part (22) opposite the first part (21), and a second tension spring (25), connected from one end to the second part (22) and from the opposite end to the sleeve (23);
the second part (22) is configured to be supported by the second support (122) so that rotation of the second part (22) in relation to the second support (122) is allowed; and the sleeve (23) is arranged rotatably in relation to the second part (22), and is supported by the first part (21) and the second part (22)
the spring constant of the first tension spring (24) is different from the spring constant of the second tension spring (25), respectively, or the first tension spring (24) is tensioned to a first pre-tension; the second tension spring (25) is tensioned to a second pre-tension; and the first pre-tension is different from the second pre-tension.

2. A wire feeder according to claim 1, **characterized in that** the first part (21) is arranged unrotatably in relation to the second part (22).

3. A wire feeder according to claim 1, **characterized in that** the first part (21) is arranged rotatably in relation to the second part (22).

4. A wire feeder according to any one of the preceding claims, **characterized in that** the wire reel hub (2) comprises a rotation limiting means for limiting the rotation angle of the sleeve (23) in relation to the first part (21).

## Patentansprüche

1. Drahtvorschubvorrichtung umfassend:
- einen Rahmen (11),
- eine Drahtspulennabe (2) zum Haltern einer Drahtspule (3) in einer Drahtvorschubvorrichtung (1), und
- ein Drahtspulennaben-Halterungsmittel (12), das eine erste Halterung (121) zum Haltern der Drahtspulennabe (2) umfasst;
- wobei das Drahtspulennaben-Halterungsmittel (12) undrehbar am Rahmen (11) befestigt ist;
**gekennzeichnet dadurch, dass**
- die Drahtspulennabe (2) ein erstes Teil (21) umfasst, das so ausgelegt ist, dass es durch die erste Halterung (121) gehaltert wird;
- die Drahtspulennabe (2) eine Hülse (23) umfasst, die durch das erste Teil (21) gehaltert wird; und
- die Hülse (23) dazu ausgelegt ist, die Drahtspule (3) rund um die Hülse (23) herum undrehbar zur Hülse (23) aufzunehmen;
wobei:
- eine Drehung des ersten Teils (21) im Verhältnis zur ersten Halterung (121) zugelassen ist;
- die Hülse (23) im Verhältnis zum ersten Teil (21) drehbar angeordnet ist; und
- die Drahtspulennabe (2) eine erste Spannfeder (24) umfasst, die an einem Ende mit dem ersten Teil (21) und am gegenüberliegenden Ende mit der Hülse (23) verbunden ist,
wobei eine Drehung des ersten Teils (21) in einer ersten Richtung zugelassen ist, nachdem das durch die Spannung in der ersten Spannfeder (24) am ersten Teil (21) bewirkte Moment das durch die Reibung zwischen dem ersten Teil (21) und der ersten Halterung (121) bewirkte Moment übersteigt,
und ferner **gekennzeichnet dadurch, dass**
das Drahtspulennaben(2)-Halterungsmittel (121) eine zweite Halterung (122) umfasst;
die Drahtspulennabe (2) ein dem ersten Teil (21) gegenüberliegendes zweites Teil (22) und eine zweite Spannfeder (25), die an einem Ende mit dem zweiten Teil (22) und am gegenüberliegenden Ende mit der Hülse (23) verbunden ist, umfasst;
das zweite Teil (22) so ausgelegt ist, dass es durch die zweite Halterung (122) dergestalt gehaltert wird, dass eine Drehung des zweiten Teils (22) im Verhältnis zur zweiten Halterung (122) zugelassen ist; und
die Hülse (23) im Verhältnis zum zweiten Teil (22) drehbar angeordnet ist und durch das erste Teil (21) und das zweite Teil (22) gehaltert wird,
die Federkonstante der ersten Spannfeder (24) von der Federkonstante der zweiten Spannfeder (25) verschieden ist, oder die erste Spannfeder (24) auf eine erste Vorspannung gespannt ist; die zweite Spannfeder (25) auf eine zweite Vorspannung gespannt ist; und die erste Vorspannung von der zweiten Vorspannung verschieden ist.

2. Drahtvorschubvorrichtung nach Anspruch 1, **gekennzeichnet dadurch, dass** das erste Teil (21) im Verhältnis zum zweiten Teil (22) undrehbar angeordnet ist.

3. Drahtvorschubvorrichtung nach Anspruch 1, **gekennzeichnet dadurch, dass** das erste Teil (21) im Verhältnis zum zweiten Teil (22) drehbar angeordnet ist.

4. Drahtvorschubvorrichtung nach einem der vorhergehenden Ansprüche, **gekennzeichnet dadurch, dass** die Drahtspulennabe (2) ein Drehbegrenzungsmittel umfasst, um den Drehwinkel der Hülse (23) im Verhältnis zum ersten Teil (21) zu begrenzen.

## Revendications

1. Dévidoir de fil comprenant :
- un cadre (11),
- un moyeu de bobine de fil (2) pour appuyer une bobine de fil (3) dans un dévidoir de fil (1), et
- un moyen d'appui de moyeu de bobine de fil (12) comprenant un premier support (121) pour appuyer le moyeu de bobine de fil (2);
- ledit moyen d'appui de moyeu de bobine de fil (12) étant attaché de manière non rotative au cadre (11);
**caractérisé en ce que**
- le moyeu de bobine de fil (21) comprend une première partie (21) configurée pour être appuyée par le premier support (121);
- le moyeu de bobine de fil (2) comprend un manchon (23) appuyé par la première partie (21); et
- le manchon (23) est configuré pour loger la bobine de fil (3) autour du manchon (23) de manière non rotative par rapport au manchon (23);
dans lequel :
- la rotation de la première partie (21) par rapport au premier support (121) est autorisée;
- le manchon (23) est disposé de manière rotative par rapport à la première partie (21); et
- le moyeu de bobine de fil (2) comprend un premier ressort de tension (24) relié à la première partie (21) par une première extrémité et au manchon (23) par l'extrémité opposée,
la rotation de ladite première partie (21) dans un premier sens étant autorisée après que le couple provoqué par la tension dans le premier ressort de tension (24) sur la première partie (21) est supérieur au couple provoqué par le frottement entre la première partie (21) et le premier support (121),
et également **caractérisé en ce que**
le moyen d'appui (121) de moyeu de bobine de fil (2) comprend un deuxième support (122);
le moyeu de bobine de fil (2) comprend une deuxième partie (22) opposée à la première partie (21) et un deuxième ressort de tension (25) relié à la deuxième partie (22) par une première extrémité et au manchon (23) par l'extrémité opposée;
la deuxième partie (22) est configurée pour être appuyée par le deuxième support (122) de telle façon que la rotation de la deuxième partie (22) par rapport au deuxième support (122) soit autorisée; et
le manchon (23) est disposé de manière rotative par rapport à la deuxième partie (22) et appuyé par la première partie (21) et la deuxième partie (22),
la constante de rappel du premier ressort de tension (24) est différente de la constante de rappel du deuxième ressort de tension (25), respectivement, ou le premier ressort de tension (24) est mis en une première précontrainte; le deuxième ressort de tension (25) est mis en une deuxième précontrainte; et la première précontrainte est différente de la deuxième précontrainte.

2. Dévidoir de fil selon la revendication 1, **caractérisé en ce que** la première partie (21) est disposée de manière non rotative par rapport à la deuxième partie (22).

3. Dévidoir de fil selon la revendication 1, **caractérisé en ce que** la première partie (21) est disposée de manière rotative par rapport à la deuxième partie (22).

4. Dévidoir de fil selon l'une des revendications précédentes, **caractérisé en ce que** le moyeu de bobine de fil (2) comprend un moyen de limitation de rotation pour limiter l'angle de rotation du manchon (23) par rapport à la première partie (21).
